# EUROPÄISCHE PATENTSCHRIFT

(11) **EP 2 316 009 B1**
(45) Veröffentlichungstag und Bekanntmachung des Hinweises auf die Patenterteilung: **19.03.2014**
(21) Anmeldenummer: 08785320.6
(22) Anmeldetag: 24.07.2008
(51) Int. Cl.: G01M 13/04

(54) **VERFAHREN UND ANORDNUNG ZUM ERMITTELN UND ÜBERWACHEN DES ZUSTANDS EINES WÄLZLAGERS**
METHOD AND ARRANGEMENT FOR DETERMINING AND MONITORING THE STATE OF A ROLLING BEARING
PROCÉDÉ ET DISPOSITIF PERMETTANT DE DÉTERMINER ET DE SURVEILLER L'ÉTAT D'UN ROULEMENT

(43) Veröffentlichungstag der Anmeldung: 04.05.2011
(73) Patentinhaber: Siemens Aktiengesellschaft, 80333 München (DE)
(72) Erfinder: KLOS, Hans-Henning, 90475 Nürnberg (DE); MÜLLER, Klaus-Dieter, 90425 Nürnberg (DE); SCHERER, Stefan, 90482 Nürnberg (DE); ZINECKER, Mike, 04600 Altenburg (DE)
(86) Internationale Anmeldenummer: PCT/EP2008/006388
(87) Internationale Veröffentlichungsnummer: WO 2010/009750

(56) Entgegenhaltungen:
- WO-A-2004/109250
- JP-A- 2001 021 453
- US-A- 4 165 458
- US-A- 4 366 544
- US-A1- 2007 118 333
- US-B1- 6 321 602

## Beschreibung

Die Zustands- und Verschleißüberwachung von Wälzlagern ist in der Praxis von großer Bedeutung, da erfahrungsgemäß etwa 70% der in Fertigungs- und Prozesseinrichtungen auftretenden Störungen durch Schäden in Wälzlagern verursacht werden.

In der US 2007/118333 wird bereits ein Verfahren beschrieben zum Überwachen des Zustands eines Wälzlagers, wobei die erfolgenden Schädigungen in Echtzeit in einem Frequenzband, insbesondere im Ultraschallbereich detektiert werden.

Der vorliegenden Erfindung liegt die Aufgabe zugrunde, ein besonders einfaches und leistungsfähiges Verfahren zum Ermitteln und Überwachen des Zustands eines Wälzlagers anzugeben. Darüber hinaus liegt der vorliegenden Erfindung die Aufgabe zugrunde, eine Anordnung anzugeben, die ein solches besonders einfaches und leistungsfähiges Verfahren unterstützt.

Diese Aufgabe wird hinsichtlich des Verfahrens erfindungsgemäß gelöst durch ein Verfahren zum Ermitteln und zum Überwachen des Zustands eines Wälzlagers aus Stahl, wobei im Betrieb des Wälzlagers ein erstes Sensorsignal in Form eines Schallemissionssignals in einem ersten Frequenzband im Ultraschallbereich erfasst wird, ein zweites Sensorsignal in einem zweiten Frequenzband niedrigerer Frequenz im Ultraschallbereich erfasst wird, aus der Signalform des ersten Sensorsignals zumindest ein erster Kennwert für eine gerade erfolgende Schädigung des Wälzlagers ermittelt wird, aus der Signalform des zweiten Sensorsignals zumindest ein zweiter Kennwert für eine bereits erfolgte Schädigung des Wälzlagers ermittelt wird und unter Durchführung eines Vergleichs des zumindest einen ersten Kennwerts mit zumindest einem von der Drehzahl des Wälzlagers abhängigen ersten Referenzwert sowie des zumindest einen zweiten Kennwerts mit zumindest einem von der Drehzahl des Wälzlagers abhängigen zweiten Referenzwert der Zustand des Wälzlagers ermittelt wird. Dabei wird das erste Sensorsignal bei einer Resonanzfrequenz zwischen 100 kHz und 120 kHz und das zweite Sensorsignal mit einer zweiten Resonanzfrequenz im Frequenzbereich zwischen 25 kHz und 50 kHz erfasst

Gemäß dem erfindungsgemäßen Verfahren wird ein erstes Sensorsignal in Form eines Schallemissionssignals in einem ersten Frequenzband im Ultraschallbereich erfasst. Unter "Schall-emission", die im englischsprachigen als "Acoustic Emission (AE)" bezeichnet wird, wird hierbei eine Erscheinung verstanden, bei der elastische Wellen durch eine stoßartige Anregung aufgrund einer plötzlichen Freisetzung von Energie innerhalb eines Festkörpers erzeugt werden. Entsprechende Schallemissionssignale, die sich in Form von Körperschall in dem Festkörper ausbreiten, treten üblicherweise in einem Frequenzbereich von etwa 100 kHz bis zu 1 MHz auf. Dabei weisen Schallemissionssignale eine hohe Sensitivität in Bezug auf mechanische Beschädigungen eines Festkörpers beziehungsweise eines Objektes auf. Dies bedeutet, dass beispielsweise bei einer Zerstörung eines Wälzlagers aus Stahl ein Schallemissionssignal erzeugt wird, das gemäß dem ersten Merkmal des erfindungsgemäßen Verfahrens in einem ersten Frequenzband im Ultraschallbereich erfasst wird.

Darüber hinaus wird erfindungsgemäß ein zweites Sensorsignal in einem zweiten Frequenzband niedrigerer Frequenz, d.h. in einem Frequenzbereich <100 kHz, im Ultraschallbereich erfasst. Das zweite Sensorsignal erfasst insbesondere so genannte Schadensfrequenzen, die im Falle eines bereits erfolgten, bestehenden Schadens bei einem rotierenden Wälzlager aufgrund von Resonanzanregungen auftreten.

Aus der Signalform des ersten Sensorsignals wird nun zumindest ein erster Kennwert für eine gerade erfolgende Schädigung des Wälzlagers ermittelt. Entsprechend den vorstehenden Ausführungen führt beispielsweise die Zerstörung von Stahl, d.h. im vorliegenden Fall des Stahls des Wälzlagers, zu einem Schallemissionssignal typischer Frequenz, welches somit eine gerade erfolgende, d.h. aktiv fortschreitende Schädigung des Wälzlagers anzeigt. Des Weiteren wird aus der Signalform des zweiten Sensorsignals zumindest ein zweiter Kennwert für eine bereits erfolgte Schädigung des Wälzlagers ermittelt. Dabei werden vorzugsweise sowohl der zumindest eine erste Kennwert als auch der zumindest eine zweite Kennwert aus der Hüllkurve des jeweiligen Sensorsignals ermittelt, da hierdurch die zu verarbeitende Datenmenge reduziert und damit das Verfahren vereinfacht wird.

Unter Durchführung eines Vergleichs des zumindest einen ersten Kennwerts mit zumindest einem von der Drehzahl des Wälzlagers abhängigen ersten Referenzwert sowie des zumindest einen zweiten Kennwerts mit zumindest einem von der Drehzahl des Wälzlagers abhängigen Referenzwert wird nun der Zustand des Wälzlagers ermittelt. Hierbei ist vorteilhafterweise sowohl eine Aussage über den Istzustand als auch über die zukünftige Entwicklung des Zustands des Wälzlagers möglich. Sowohl der erste als auch der zweite Referenzwert sind von der jeweiligen Drehzahl des Wälzlagers abhängig, da sich gezeigt hat, dass die Amplituden des ersten sowie des zweiten Sensorsignals jeweils proportional zur Drehzahl des Wälzlagers sind.

Bei den für den Vergleich mit den jeweiligen Kennwerten verwendeten Referenzwerten kann es sich vorzugsweise um Werte handeln, die mittels Referenzmessungen an in bekannter Weise be- bzw. geschädigten Wälzlagern gewonnen worden sind. In diesem Fall deutet ein Erreichen beziehungsweise Überschreiten des jeweiligen Referenzwerts durch einen jeweiligen Kennwert unmittelbar auf einen entsprechenden Schaden des Wälzlagers hin, so dass eine präzise Aussage über den Zustand des Wälzlagers möglich ist. Alternativ hierzu können jedoch auch in einem ungeschädigten Zustand des Wälzlagers gemessene Werte als Referenzwerte verwendet werden. In diesem Fall wird das Wälzlager etwa dann als ausfallgefährdet beziehungsweise sein Zustand als kritisch angesehen, wenn zumindest einer der Kennwerte den jeweiligen zugehörigen Referenzwert um ein vorgegebenes beziehungsweise vorgebbares Maß überschreitet.

Generell bietet das erfindungsgemäße Verfahren den Vorteil, dass die Überwachung eines Wälzlagers in besonders einfacher Form ermöglicht wird. So kann das erfindungsgemäße Verfahren beispielsweise unter Verwendung eines einzigen Sensors realisiert werden, wobei vorteilhafterweise unabhängig von Typ oder Größe des Wälzlagers der gleiche Sensor eingesetzt werden kann. Darüber hinaus ermöglicht die kombinierte Erfassung und Auswertung des ersten und des zweiten Sensorsignals eine besonders leistungsfähige, d.h. insbesondere besonders aussagekräftige, Bestimmung des Zustands des Wälzlagers. Dies hat zur Folge, dass die Überwachung des Zustands des Wälzlagers in zuverlässiger Art und Weise dafür verwendet werden kann, eine Entscheidung darüber zu treffen, ob eine Reparatur oder ein Austausch des Wälzlagers erforderlich ist beziehungsweise wann eine solche Reparatur beziehungsweise ein solcher Austausch gegebenenfalls voraussichtlich erforderlich werden wird.

In einer besonders bevorzugten Ausführungsform des erfindungsgemäßen Verfahrens wird der zumindest eine erste Kennwert mit zumindest einem auch von dem Material, der Größe, der Masse und/oder dem Typ des Wälzlagers abhängigen ersten Referenzwert verglichen. Dies ist vorteilhaft, da der erste Referenzwert in der Regel eine Abhängigkeit von dem Material sowie der Größe beziehungsweise Masse des Wälzlagers und somit auch vom Typ des Wälzlagers aufweisen wird. So ist der zumindest eine erste Referenzwert aufgrund der Art seiner Entstehung, d.h. aufgrund der Verwendung eines ersten Sensorsignals in Form eines Schallemissionssignals, in der Regel zumindest in einem gewissen Umfang von dem Material des betreffenden Wälzlagers abhängig. Üblicherweise wird es sich bei dem Material des Wälzlagers um Stahl handeln, jedoch ist das erfindungsgemäße Verfahren grundsätzlich für Wälzlager beliebigen Materials anwendbar. Um eine möglichst genaue Überwachung des Zustands des Wälzlagers zu ermöglichen, wird vorteilhafterweise somit zumindest eine der genannten Größen bei einer dem Verfahren vorangehenden Ermittlung beziehungsweise Festlegung des zumindest einen ersten Referenzwerts berücksichtigt. Neben einer Bestimmung des ersten Referenzwerts für den jeweiligen verwendeten Wälzlagertyp kann dies beispielsweise auch derart geschehen, dass eine Messung des ersten Referenzwerts für verschiedene Wälzlager unterschiedlicher Größe, unterschiedlicher Masse und/oder unterschiedlichen Typs erfolgt und basierend auf einer solchen Messung der zumindest eine erste Referenzwert für Wälzlager anderen Typs berechnet bzw. simuliert wird.

Vorzugsweise kann das erfindungsgemäße Verfahren auch derart ausgestaltet sein, dass der zumindest eine zweite Kennwert mit zumindest einem auch von dem Material, der Größe, der Masse und/oder dem Typ des Wälzlagers abhängigen zweiten Referenzwert verglichen wird. Entsprechend den vorstehenden Ausführungen im Zusammenhang mit dem ersten Referenzwert, die in entsprechender Weise auch hinsichtlich des zweiten Referenzwerts gelten, bietet dies den Vorteil, dass eine besonders genaue und zuverlässige Ermittlung beziehungsweise Überwachung des Zustands des Wälzlagers ermöglicht wird. Im Vergleich zu dem zumindest einen ersten Kennwert bzw. dem zumindest einen ersten Referenzwert werden der zweite Kennwert und damit auch der zweite Referenzwert jedoch üblicherweise vergleichsweise weniger stark oder gegebenenfalls auch überhaupt nicht von dem Material des Wälzlagers abhängen.

In einer weiteren bevorzugten Ausführungsform ist das erfindungsgemäße Verfahren derart ausgeprägt, dass das erste Sensorsignal mittels eines ersten mechanisch schwingfähigen Systems mit einer vom Material des Wälzlagers abhängigen und von Größe und Drehzahl des Wälzlagers unabhängigen ersten Resonanzfrequenz erfasst wird. Als Ergebnis umfassender Untersuchungen sowohl an beschädigten als auch an unbeschädigten Wälzlagern hat sich gezeigt, dass das mittels des ersten Sensorsignals erfasste Schallemissionssignal hinsichtlich seiner Frequenz im Wesentlichen nicht von Größe und Drehzahl des Wälzlagers abhängt. Hierdurch wird es vorteilhafterweise ermöglicht, das erste Sensorsignal beispielsweise für alle Wälzlager aus Stahl mittels eines ersten mechanisch schwingfähigen Systems mit derselben ersten Resonanzfrequenz zu erfassen. Dies bietet den grundlegenden Vorteil, dass eine zur Erfassung des ersten Sensorsignals ausgebildete Sensoreinrichtung für beliebige Wälzlager desselben Materials verwendet werden kann.

In einer besonders bevorzugten Weiterbildung des erfindungsgemäßen Verfahrens wird bei einem Wälzlager aus Stahl das erste Sensorsignal bei einer Resonanzfrequenz zwischen 100 kHz und 120 kHz erfasst. So hat es sich im Rahmen der bereits erwähnten umfangreichen Untersuchungen und Studien gezeigt, dass insbesondere eine Frequenz des ersten Sensorsignals von etwa 110 kHz unabhängig von Drehzahl oder Typ des Wälzlagers charakteristisch für die Zerstörung eines Wälzlagers aus Stahl ist.

Vorzugsweise kann das erfindungsgemäße Verfahren auch so ablaufen, dass das erste Sensorsignal in einem ersten Frequenzband einer Bandbreite von 4 kHz bis 8 kHz erfasst wird. Es hat sich gezeigt, dass die Erfassung des ersten Sensorsignals in einem schmalbandigen ersten Frequenzband der genannten Breite eine besonders genaue und aussagekräftige Messwerterfassung ermöglicht. Im Vergleich zu einer breitbandigen Erfassung des ersten Sensorsignals bietet dies insbesondere den grundlegenden Vorteil, dass Aufwände für eine nachfolgende Bearbeitung, beispielsweise in Form einer Filterung, des ersten Sensorsignals vermieden werden.

Vorteilhafterweise kann das erfindungsgemäße Verfahren auch derart ausgestaltet sein, dass das zweite Sensorsignal unabhängig von Material, Größe und Drehzahl des Wälzlagers mittels eines zweiten mechanisch schwingfähigen Systems mit einer zweiten Resonanzfrequenz im Frequenzbereich zwischen 25 kHz und 50 kHz erfasst wird. So konnte nachgewiesen werden, dass eine Erfassung des zweiten Sensorsignals bei einer zweiten Resonanzfrequenz im Frequenzbereich zwischen 25 kHz und 50 kHz unabhängig von Material, Drehzahl und Größe des Wälzlagers besonders aussagekräftig hinsichtlich einer bereits erfolgten Schädigung des Wälzlagers ist.

Vorzugsweise ist das erfindungsgemäße Verfahren derart ausgestaltet, dass das zweite Sensorsignal in einem zweiten Frequenzband einer Bandbreite von 3 kHz bis 7 kHz erfasst wird. Auch hinsichtlich des zweiten Sensorsignals hat es sich als besonders vorteilhaft herausgestellt, wenn dieses Signal schmalbandig, insbesondere mit einer Bandbreite zwischen 3 und 7 kHz erfasst wird. Hierdurch werden Störsignale auf einfache Art und Weise ausgeblendet, so dass sich der Aufwand für die Signalverarbeitung erheblich reduziert.

Bei dem ersten Kennwert und dem zweiten Kennwert kann es sich grundsätzlich um beliebige Kenngrößen handeln, welche die Signalform des jeweiligen Sensorsignals charakterisieren. Eine besonders aussagekräftige und einfache Bestimmung der Kennwerte ist gemäß einer bevorzugten Weiterbildung des erfindungsgemäßen Verfahrens dadurch möglich, dass zur Ermittlung des ersten Kennwerts und des zweiten Kennwerts jeweils das Produkt aus Maximal- und Effektivwert des jeweiligen Sensorsignals ermittelt wird. Dabei kann der jeweilige Kennwert durch das jeweilige Produkt selbst gegeben sein oder beispielsweise durch Multiplikation des Produktes mit einem konstanten Faktor bestimmt werden.

Vorteilhafterweise ist das erfindungsgemäße Verfahren derart ausgestaltet, dass ein Alarmsignal ausgegeben wird, sofern der zumindest eine erste Kennwert und/oder der zumindest eine zweite Kennwert über eine definierte Zeitdauer von dem jeweiligen Referenzwert abweichen. Dies ist vorteilhaft, da somit beispielsweise Betriebs- oder Überwachungspersonal über eine vorliegende Schädigung beziehungsweise eine drohende Schädigung beziehungsweise einen drohenden Ausfall des Wälzlagers informiert werden kann. Vorteilhafterweise kann dabei anwendungsspezifisch festgelegt werden, wie groß eine Abweichung des zumindest einen ersten Kennwerts und/oder des zumindest einen zweiten Kennwerts von dem jeweiligen Referenzwert werden darf, bevor eine Alarmierung in Form der Ausgabe eines Alarmsignals erfolgt.

Hinsichtlich der Anordnung wird die der Erfindung zugrunde liegende Aufgabe erfindungsgemäß gelöst durch eine Anordnung zum Ermitteln und zum Überwachen des Zustands eines Wälzlagers in seinem Betrieb mit einer ersten Sensoreinrichtung zum Erfassen eines ersten Sensorsignals in Form eines Schallemissionssignals in einem ersten Frequenzband im Ultraschallbereich, einer zweiten Sensoreinrichtung zum Erfassen eines zweiten Sensorsignals in einem zweiten Frequenzband niedrigerer Frequenz im Ultraschallbereich, ersten Mitteln zur Signalverarbeitung zum Ermitteln zumindest eines ersten Kennwerts für eine gerade erfolgende Schädigung des Wälzlagers aus der Signalform des ersten Sensorsignals, zweiten Mitteln zur Signalverarbeitung zum Ermitteln zumindest eines zweiten Kennwerts für eine bereits erfolgte Schädigung des Wälzlagers aus der Signalform des zweiten Sensorsignals und einer Auswerte-Einrichtung zum Ermitteln des Zustands des Wälzlagers unter Durchführung eines Vergleichs des zumindest einen ersten Kennwerts mit zumindest einem von der Drehzahl des Wälzlagers abhängigen ersten Referenzwert sowie des zumindest einen zweiten Kennwerts mit zumindest einem von der Drehzahl des Wälzlagers abhängigen zweiten Referenzwert.

Die Vorteile der erfindungsgemäßen Anordnung entsprechen im Wesentlichen denjenigen des erfindungsgemäßen Verfahrens, so dass diesbezüglich auf die entsprechenden vorstehenden Ausführungen verwiesen wird. Gleiches gilt hinsichtlich im Folgenden aufgeführter bevorzugter Weiterbildungen der erfindungsgemäßen Anordnung jeweils in Bezug auf die entsprechende bevorzugte Weiterbildung des erfindungsgemäßen Verfahrens.

Vorteilhafterweise ist die erfindungsgemäße Anordnung derart ausgestaltet, dass die Auswerte-Einrichtung zum Vergleichen des zumindest einen ersten Kennwerts mit zumindest einem auch von dem Material, der Größe, der Masse und/oder dem Typ des Wälzlagers abhängigen ersten Referenzwert ausgebildet ist.

In einer weiteren besonders bevorzugten Weiterbildung ist die erfindungsgemäße Anordnung derart weitergebildet, dass die Auswerte-Einrichtung zum Vergleichen des zumindest einen zweiten Kennwerts mit zumindest einem auch von dem Material, der Größe, der Masse und/oder dem Typ des Wälzlagers abhängigen zweiten Referenzwert ausgebildet ist.

Vorteilhafterweise kann die erfindungsgemäße Anordnung auch derart ausgestaltet sein, dass die erste Sensoreinrichtung zum vom Material des Wälzlagers abhängigen und von Größe und Drehzahl des Wälzlagers unabhängigen Erfassen des ersten Sensorsignals ein erstes mechanisch schwingfähiges System mit einer ersten Resonanzfrequenz aufweist.

In einer weiteren besonders bevorzugten Ausgestaltung ist die erfindungsgemäße Anordnung derart weitergebildet, dass die erste Sensoreinrichtung zum Ermitteln des Zustands eines Wälzlagers aus Stahl zum Erfassen des ersten Sensorsignals bei einer Resonanzfrequenz zwischen 100 kHz und 120 kHz ausgebildet ist.

Vorteilhafterweise kann die erfindungsgemäße Anordnung derart ausgeprägt sein, dass die erste Sensoreinrichtung zum Erfassen des ersten Sensorsignals in einem ersten Frequenzband einer Bandbreite von 4 kHz bis 8 kHz vorgesehen ist.

In einer weiteren besonders bevorzugten Ausführungsform ist die erfindungsgemäße Anordnung derart weitergebildet, dass die zweite Sensoreinrichtung zum von Material, Größe und Drehzahl des Wälzlagers unabhängigen Erfassen des zweiten Sensorsignals ein zweites mechanisch schwingfähiges System mit einer zweiten Resonanzfrequenz im Frequenzbereich zwischen 25 kHz und 50 kHz aufweist.

In einer besonders bevorzugten Ausführungsform der erfindungsgemäßen Anordnung ist die zweite Sensoreinrichtung zum Erfassen des zweiten Sensorsignals in einem zweiten Frequenzband einer Bandbreite von 3 kHz bis 7 kHz vorgesehen.

Vorzugsweise ist die erfindungsgemäße Anordnung derart ausgestaltet, dass die ersten und die zweiten Mittel zur Signalverarbeitung zur Ermittlung des ersten bzw. des zweiten Kennwerts zum Ermitteln des Produkts aus Maximalwert und Effektivwert des jeweiligen Sensorsignals ausgebildet sind.

Vorteilhafterweise kann die erfindungsgemäße Anordnung auch derart weitergebildet sein, dass die Auswerte-Einrichtung zum Ausgeben eines Alarmsignals vorgesehen ist, sofern der zumindest eine erste Kennwert und/oder der zumindest eine zweite Kennwert über eine definierte Zeitdauer von dem jeweiligen Referenzwert abweichen.

Darüber hinaus kann die erfindungsgemäße Anordnung vorteilhafterweise derart ausgeführt sein, dass die erste und die zweite Sensoreinrichtung als gemeinsames mikromechanisches System ausgebildet sind. Entsprechende mikromechanische Systeme, die auch als MEMS (Micro-Electro-Mechanical-System) bekannt sind, bieten den Vorteil, dass sie klein, leistungsfähig und vergleichsweise kostengünstig sind.

Vorzugsweise kann die erfindungsgemäße Anordnung auch derart ausgestaltet sein, dass die erste und/oder die zweite Sensoreinrichtung als piezoelektrische, piezoresistive, kapazitive oder induktive Sensoreinheiten realisiert sind. Dies ist insbesondere im Fall einer Ausbildung des ersten und der zweiten Sensoreinrichtung als gemeinsames mikromechanisches System, d.h. etwa bei einer Aufbringung der Sensoreinrichtungen auf einem gemeinsamen Substrat, vorteilhaft.

Vorteilhafterweise ist die erfindungsgemäße Anordnung derart ausgestaltet, dass die ersten Mittel zur Signalverarbeitung, die zweiten Mittel zur Signalverarbeitung und die Auswerte-Einrichtung in einem integrierten elektrischen Schaltkreis zusammengefasst sind. Hierdurch wird wiederum eine besonders einfache, platzsparende und kostengünstige Realisierung der erfindungsgemäßen Anordnung ermöglicht.

Vorzugsweise kann die erfindungsgemäße Anordnung auch derart ausgeprägt sein, dass die erste und die zweite Sensoreinrichtung in einem integrierten elektrischen Schaltkreis zusammengefasst sind.

In einer weiteren besonders bevorzugten Ausführungsform der erfindungsgemäßen Anordnung ist eine Verstärkereinheit zum Verstärken des ersten und/oder des zweiten Sensorsignals vorgesehen, und die Auswerte-Einrichtung zum Einstellen der Verstärkung der Verstärkereinheit vorgesehen. Dies ist vorteilhaft, da durch die Sensoreinheiten insbesondere aufgrund der Drehzahlabhängigkeit der Signalamplitude in der Regel große Signalbereiche, d.h. große Amplitudenunterschiede, abzudecken sind. Die sich hieraus ergebenden hohen Anforderungen an die Dynamik werden vorteilhafterweise somit dadurch erreicht, dass die Verstärkereinheit von der Auswerte-Einrichtung in Abhängigkeit von der Eingangssignalstärke auf eine geeignete Verstärkungsstufe justiert wird.

Im Folgenden wird die Erfindung anhand von Ausführungsbeispielen näher erläutert. Hierzu zeigt bzw. zeigen
- Figur 1: in einer schematischen Darstellung ein erstes Ausführungsbeispiel der erfindungsgemäßen Anordnung,
- Figuren 2 und 3: Diagramme zur Erläuterung eines Ausführungsbeispiels des erfindungsgemäßen Verfahrens,
- Figur 4: in einer schematischen Darstellung ein zweites Ausführungsbeispiel der erfindungsgemäßen Anordnung,
- Figur 5: in einer schematischen Darstellung ein drittes Ausführungsbeispiel der erfindungsgemäßen Anordnung und
- Figuren 6 und 7: weitere Diagramme zur Erläuterung des Ausführungsbeispiels des erfindungsgemäßen Verfahrens.

Aus Gründen der Übersichtlichkeit sind in den Figuren gleiche beziehungsweise hinsichtlich ihrer Funktionalität im Wesentlichen gleiche Komponenten jeweils mit denselben Bezugszeichen gekennzeichnet.

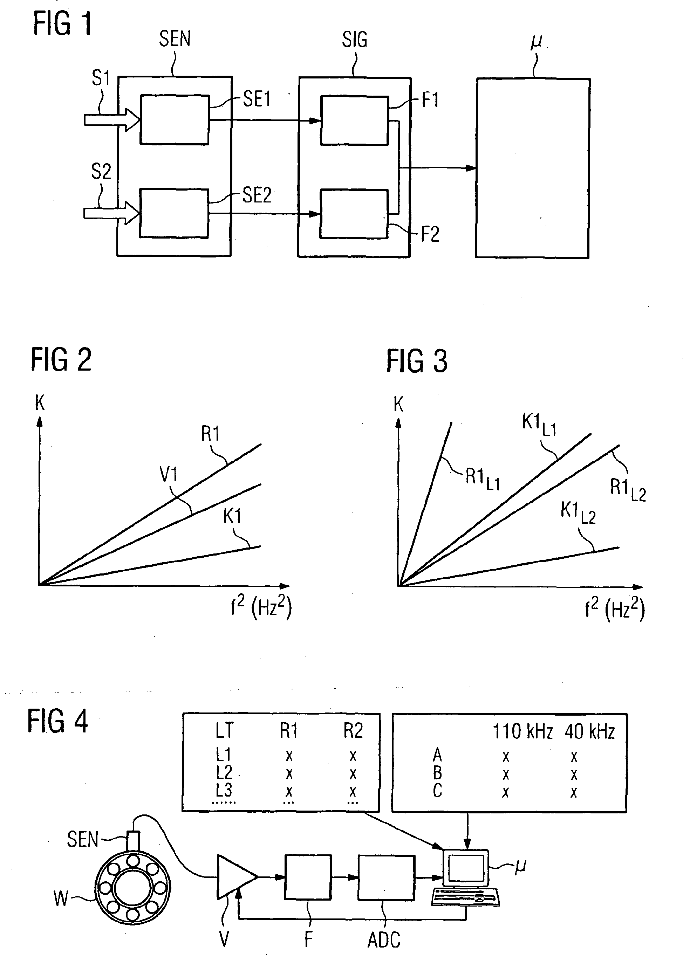

Figur 1 zeigt in einer schematischen Darstellung ein erstes Ausführungsbeispiel der erfindungsgemäßen Anordnung. Dabei sei angenommen, dass die Anordnung der Überwachung eines Wälzlagers aus Stahl dient. Hierzu weist die Anordnung eine erste Sensoreinrichtung SE1 zum Erfassen eines ersten Sensorsignals S1 in Form eines Schallemissionssignals in einem ersten Frequenzband im Ultraschallbereich auf. In dem beschriebenen Ausführungsbeispiel wird das erste Sensorsignal S1 mittels eines in Figur 1 nicht dargestellten ersten mechanisch schwingfähigen Systems bei einer ersten Resonanzfrequenz von 110 kHz mit einer Bandbreite von 4 kHz bis 8 kHz, das heißt beispielsweise 5 kHz, erfasst. Es hat sich gezeigt, dass insbesondere bei einer Messung im Bereich der zuvor genannten ersten Resonanzfrequenz aus der Signalform des ersten Sensorsignals ein erster Kennwert ermittelt werden kann, der eine besonders zuverlässige Aussage über eine gerade erfolgende, das heißt aktiv fortschreitende Schädigung des Wälzlagers erlaubt. So ist die genannte Frequenz von etwa 110 kHz charakteristisch für die Zerstörung eines Wälzlagers aus Stahl und hängt insbesondere nicht von Drehzahl oder Typ des Wälzlagers ab.

Die Anordnung weist darüber hinaus eine zweite Sensoreinrichtung SE2 zum Erfassen eines zweiten Sensorsignals S2 in einem zweiten Frequenzband niedrigerer Frequenz im Ultraschallbereich auf. Die Erfassung erfolgt dabei mittels eines zweiten mechanisch schwingfähigen Systems mit einer zweiten Resonanzfrequenz von 40 kHz sowie einer Bandbreite von ebenfalls 5 kHz. Gemäß umfangreichen Untersuchungen ist dieser Frequenzbereich besonders gut zur Bestimmung einer bereits erfolgten, das heißt vorliegenden, Schädigung des Wälzlagers aus der Signalform des zweiten Sensorsignals S2 geeignet. Vorteilhafterweise ist der genannte Frequenzbereich dabei unabhängig von Drehzahl und Typ des jeweiligen Wälzlagers.

Somit ermöglichen es die beiden Sensoreinrichtungen SE1 und SE2, die bei dem Ausführungsbeispiel der Figur 1 in einem gemeinsamen Sensor SEN, etwa in Form eines auf einem elektrischen Schaltkreis integrierten mikromechanischen Systems, zusammengefasst sind, dass der gleiche Sensor SEN für alle Wälzlager aus Stahl verwendet werden kann. Ursache hierfür ist, dass die beiden genannten Resonanzfrequenzen weder von der Drehzahl noch von der Größe des Wälzlagers abhängen. Sofern das Wälzlager aus einem anderen Material als Stahl bestehen würde, so wäre vorteilhafterweise lediglich eine Anpassung der ersten Resonanzfrequenz erforderlich.

In dem Ausführungsbeispiel der Figur 1 sei angenommen, dass mittels ersten Mitteln zur Signalverarbeitung F1 ein erster Kennwert für eine gerade erfolgende Schädigung des Wälzlagers aus der Signalform des ersten Sensorsignals S1 ermittelt wird. Entsprechend wird mittels zweiten Mitteln zur Signalverarbeitung F2 ein zweiter Kennwert für eine bereits erfolgte Schädigung des Wälzlagers aus der Signalform des zweiten Sensorsignals S2 ermittelt. Gemäß der Darstellung der Figur 1 können die ersten und zweiten Mittel zur Signalverarbeitung F1, F2, die beispielsweise in Form von Filtern realisiert sein können, vorteilhafterweise in einem integrierten elektrischen Schaltkreis zusammengefasst sein, der gegebenenfalls darüber hinaus eine Auswerte-Einrichtung *µ*, etwa in Form eines Mikroprozessors, mit umfassen kann. Die Auswerte-Einrichtung *µ* dient zum Ermitteln des Zustands des Wälzlagers unter Durchführung eines Vergleichs des ersten Kennwerts mit einem von der Drehzahl des Wälzlagers abhängigen ersten Referenzwert sowie des zweiten Kennwerts mit einem von der Drehzahl des Wälzlagers abhängigen zweiten Referenzwert.

In dem Ausführungsbeispiel der Figur 1 ermitteln die ersten Mittel zur Signalverarbeitung F1 sowie die zweiten Mittel zur Signalverarbeitung F2, die in einer gemeinsamen Signalverarbeitungs-Einrichtung SIG integriert sind, den jeweiligen Kennwert jeweils basierend auf der Hüllkurve des jeweiligen Sensorsignals. Dies bietet den Vorteil, dass im Vergleich zu einer auf dem eigentlichen jeweiligen Sensorsignal basierenden Auswertung eine geringere Datenmenge zu verarbeiten ist.

Im Folgenden sei angenommen, dass der jeweilige Kennwert durch die ersten Mittel zur Signalverarbeitung F1 sowie die zweiten Mittel zur Signalverarbeitung F2 als Produkt des Maximalwerts der Amplitude des jeweiligen Sensorsignals S1, S2 und des jeweiligen Effektivwerts, d.h. des quadratischen Mittelwerts, der Amplitude desselben Sensorsignals S1, S2 bestimmt wird, d.h. K1 = Max1(t) * RMS1(t) und K2 = Max2(t) * RMS2(t), wobei Max1(t) sowie Max2(t) die jeweiligen Maximalwerte und RMS1(t) sowie RMS2(t) die jeweiligen Effektivwerte des ersten Sensorsignals S1 beziehungsweise des zweiten Sensorsignals S2 bezeichnen. Dabei wird durch die zeitliche Abhängigkeit der Größen zum Ausdruck gebracht, dass die entsprechenden Werte zum jeweiligen Überwachungszeitpunkt ermittelt werden. Zum Ermitteln und Überwachen des Zustands des Wälzlagers W werden die derart ermittelten Kennwerte K1, K2 nun mit Referenzwerten R1, R2 verglichen, wobei die diesbezügliche weitere Vorgehensweise im Folgenden anhand der Figuren 2 und 3 näher erläutert wird.

Die Figuren 2 und 3 zeigen Diagramme zur Erläuterung eines Ausführungsbeispiels des erfindungsgemäßen Verfahrens.

Umfangreiche Untersuchungen haben im Ergebnis gezeigt, dass sowohl für das erste Sensorsignal S1 als auch für das zweite Sensorsignal S2, insbesondere auch bei den beiden in dem Ausführungsbeispiel angenommenen Frequenzen beziehungsweise Frequenzbändern, unabhängig vom Wälzlagertyp ein linearer Zusammenhang zwischen der Drehzahl des Wälzlagers und der Signalamplitude besteht. Somit sind die Kennwerte K1, K2, d.h. das jeweilige Produkt K aus Maximalwert und Effektivwert der Sensorsignale S1, S2, proportional zum Quadrat der Drehzahl des Wälzlagers. Dies wird in Figur 2 deutlich, in der dieser Zusammenhang schematisch am Beispiel des ersten Sensorsignals S1 dargestellt ist.

Neben dem ersten Kennwert K1 ist in Figur 2 weiterhin ein erster Referenzwert R1 dargestellt, der bezogen auf ein Referenzlager ebenfalls unter Verwendung des Produkts K aus Maximalwert und Effektivwert des ersten Sensorsignals S1 bestimmt worden ist. Dabei ist der erste Referenzwert R1 aufgrund seiner dem ersten Kennwert K1 entsprechenden Berechnung ebenfalls vom Quadrat der Drehzahl des Wälzlagers abhängig, so dass sich auch für den ersten Referenzwert R1 in der Darstellung der Figur 2 eine Gerade ergibt.

Sowohl bei dem ersten Kennwert K1 als auch dem entsprechenden ersten Referenzwert R1 handelt es sich um Ursprungsgeraden, da im Stillstand des Wälzlagers keine Signale emittiert werden. Dies bedeutet andererseits aber auch, dass basierend auf einer Messung des ersten Referenzwerts R1 bei einer bestimmten Drehzahl der Wert des ersten Referenzwerts R1 für beliebige andere Drehzahlen des Wälzlagers berechnet werden kann. Ursache hierfür ist, dass die in Figur 2 dargestellte Gerade durch den einen gemessenen Wert sowie den Ursprung eindeutig bestimmt ist. Somit ist es ausreichend, bei einer bestimmten Drehzahl von beispielsweise 25 Hz eine Messung an einem Referenzlager vorzunehmen und hierbei aus den erfassten Sensorsignalen den ersten Referenzwert R1 sowie den zweiten Referenzwert R2 zu ermitteln. Basierend auf den bei der betreffenden Drehzahl ermittelten Referenzwerten R1, R2 können die Referenzwerte R1, R2 bei einer beliebigen anderen Drehzahl im Folgenden auf einfache Art und Weise berechnet werden. Dies bedeutet, dass letztlich für jedes der beiden Sensorsignale S1, S2 ein Referenzwert R1, R2 ausreichend ist, um das Referenzlager zu charakterisieren bzw. eine Überwachung des Zustands des Wälzlagers zu ermöglichen.

Als Referenzlager kann einerseits ein Wälzlager im eingelaufenen, unbeschädigten Zustand verwendet werden. Sofern der erste Referenzwert R1 bezogen auf ein solches unbeschädigtes Referenzlager ermittelt wird bzw. worden ist, so kann eine gerade erfolgende Schädigung des Wälzlagers beispielsweise dann erkannt werden, wenn der ermittelte erste Kennwert K1 den ersten Referenzwert bei derselben Drehzahl um einen konstanten Faktor von beispielsweise 4 überschreitet. Zur einfacheren Darstellung kann ein entsprechender Faktor auch bereits bei der Berechnung des ersten Referenzwerts R1 berücksichtigt werden, in welchen Fall sich eine der Figur 2 entsprechende Darstellung ergeben würde. In dem Ausführungsbeispiel der Figur 2 ist das überwachte Wälzlager nicht beschädigt, so dass sich der erste Referenzwert R1 und der erste Kennwert K1 bei der jeweiligen Frequenz im Wesentlichen um den konstanten Faktor unterscheiden.

Alternativ zu der vorstehend beschriebenen Vorgehensweise kann der erste Referenzwert R1 auch bezogen auf ein geschädigtes Referenzlager ermittelt werden. Auch in diesem Fall könnte sich eine Darstellung entsprechend derjenigen der Figur 2 ergeben, wobei für den Fall, dass der erste Kennwert K1 den ersten Referenzwert R1 erreicht, davon ausgegangen werden kann, dass das überwachte Wälzlager entsprechend oder zumindest in ähnlicher Weise bzw. Stärke wie das verwendete Referenzlager geschädigt ist.

Aus den vorstehenden Erläuterungen ergibt sich, dass für eine einfache und aussagekräftige Auswertung der erfassten Sensorsignale S1, S2 in dem beschriebenen Ausführungsbeispiel zur Ermittlung der drehzahlabhängigen Referenzwerte R1, R2 für jedes der Sensorsignale S1, S2 jeweils lediglich ein Parameter benötigt wird, der beispielsweise durch die Steigung der in Figur 2 für R1 dargestellten Geraden gegeben sein kann. Aus diesen Parametern kann in Abhängigkeit von der jeweiligen Betriebsdrehzahl der konkrete jeweilige Referenzwert R1, R2 unmittelbar errechnet werden.

Sobald einer der Kennwerte K1, K2 den jeweiligen Referenzwert R1, R2 bei derselben Drehzahl für einen definierten Zeitraum überschreitet, kann vorteilhafterweise ein Alarm, beispielsweise in Form einer roten Signallampe, aktiviert werden. Darüber hinaus lässt sich bei einem Vergleich der ermittelten Kennwerte K1, K2 mit den jeweiligen Referenzwerten R1, R2 gemäß dem beschriebenen Ausführungsbeispiel auf besonders einfache Art und Weise eine Vorwarnung, etwa in Form einer Aktivierung einer gelben Warnlampe, realisieren. So kann dem Anwender bzw. Betreiber des Wälzlagers vorteilhafterweise beispielsweise die Möglichkeit gegeben werden, einen "Vorwarn-Faktor" kleiner 1 anzugeben, mit dem der jeweilige Referenzwert R1, R2 multipliziert wird. Wird während der Lagerüberwachung ein erster Kennwert K1 beziehungsweise ein zweiter Kennwert K2 erreicht, der über dem derart bestimmten Vorwarnwert, aber unter dem eigentlichen jeweiligen Referenzwert R1 bzw. R2 liegt, so wird vorteilhafterweise eine entsprechende Vorwarnung generiert. Eine entsprechende "Grenzgerade" für eine Vorwarnung ist in Figur 2 in Form der Geraden V1 dargestellt.

Die Amplituden des Sensors, das heißt der ersten Sensoreinrichtung SE1 sowie der zweiten Sensoreinrichtung SE2, hängen in der Regel auch von der Größe beziehungsweise von der rotierenden Masse, das heißt letztlich vom Typ des Wälzlagers ab. Dies umfasst insbesondere hinsichtlich des ersten Sensorsignals S1 aufgrund der Art seiner Entstehung üblicherweise auch eine Abhängigkeit von dem Material des Wälzlagers. Dies wird im Folgenden anhand von Figur 3 näher erläutert.

In Figur 3 ist der erste Kennwert K1 jeweils für zwei Wälzlager L1 und L2 unterschiedlichen Typs dargestellt, wobei darüber hinaus auch die für die jeweiligen Wälzlager L1, L2 gültigen Referenzwerte R1_{L1} und R1_{L2} dargestellt sind. Es ist deutlich erkennbar, dass sich sowohl die ersten Kennwerte K1_{L1} und K1_{L2} als auch die jeweiligen Referenzwerte R1_{L1} und R1_{L2} für die beiden Wälzlager L1 und L2 unterscheiden, wobei sich jedoch in der der Darstellung der Figur 2 entsprechenden grafischen Darstellung in Abhängigkeit von dem Quadrat der Drehzahl f² der Wälzlager L1, L2 jeweils ein linearer Zusammenhang ergibt.

Figur 4 zeigt in einer schematischen Darstellung ein zweites Ausführungsbeispiel der erfindungsgemäßen Anordnung. Gezeigt ist ein Wälzlager W, an dem ein Sensor SEN mit Sensoreinheiten zur Erfassung des ersten und des zweiten Sensorsignals angebracht ist. Die jeweiligen Sensorsignale werden durch eine Verstärkereinheit V verstärkt und einem Filter F zugeführt, der erste sowie zweite Mittel zur Signalverarbeitung zum Ermitteln zumindest eines Kennwerts aus der Signalform des jeweiligen Sensorsignals aufweist. Über einen A/D-Wandler ADC werden die entsprechend gefilterten Werte einer Auswerte-Einrichtung *µ* zugeführt, die beispielsweise als Mikrocontroller oder PC ausgeführt sein kann. Da der die SensorEinrichtungen umfassende Sensor SEN einen großen Signalbereich abdecken muss, ergeben sich hinsichtlich der Dynamik der Verstärkereinheit V hohe Anforderungen. Diese werden dadurch erreicht, dass die Verstärkereinheit V von der Kontrolleinheit, das heißt der Auswerte-Einrichtung *µ*, je nach Eingangssignalstärke auf eine geeignete Verstärkerstufe eingestellt wird.

Die Auswerte-Einrichtung *µ* dient neben der Steuerung der Verstärkereinheit V insbesondere der Auswertung und Darstellung der Messergebnisse. Hierfür weist die Auswerte-Einrichtung *µ* vorteilhafterweise eine Datentabelle auf, in der für jeden Lagertyp LT, das heißt Wälzlager L1, L2, L3,... die jeweiligen Referenzwerte R1, R2 bei einer bestimmten Drehzahl des jeweiligen Wälzlagers L1, L2, L3 abgelegt sind. Zwar sind Wälzlager W in der Praxis unterschiedlichen Lasten ausgesetzt; es hat sich jedoch gezeigt, dass der Einfluss der Last auf die jeweiligen Kenn- sowie Referenzwerte im zulässigen Lastbereich eines Wälzlagers W vernachlässigbar klein ist. Die Referenzwerte R1, R2 können beispielsweise für Wälzlager unterschiedlichen Typs einmalig erfasst und in der Datentabelle hinterlegt werden. Durch das Auslesen der Referenzwerte R1, R2 des zu überwachenden Wälzlagers W wird mittels der Auswerte-Einrichtung *µ* eine aufwandsarme und zuverlässige Überwachung des Zustands des Wälzlagers W ermöglicht.

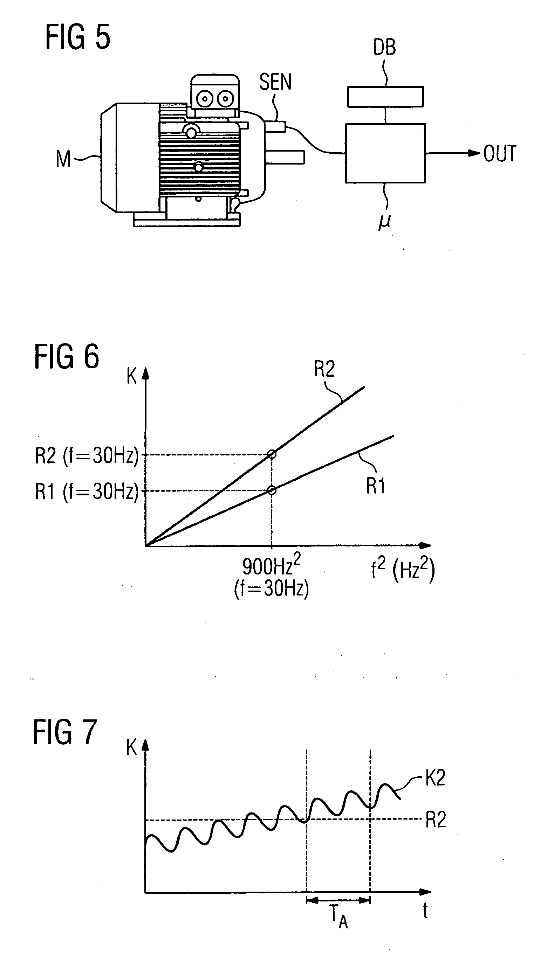

Die Auswerte-Einrichtung *µ* bietet weiterhin die Möglichkeit, anwenderspezifische Vorgaben hinsichtlich der Auswertung der erfassten Sensorsignale zu machen. In dem dargestellten Ausführungsbeispiel bedeutet dies, dass mittels eines Parameters A eine Vorwarnstufe z.B. in Prozent, mittels eines Parameters B ein Zeitfenster z.B. in Sekunden und mittels eines Parameters C ein Überschreitungsgrad z.B. in Prozent vorgegeben werden kann. Dies bedeutet, dass der Parameter A dem im Zusammenhang mit Figur 2 erläuterten Vorwarn-Faktor entspricht. Die Bedeutung der Parameter B und C wird im Zusammenhang mit Figur 7 näher erläutert werden. Generell kann die Vorgabe der Parameter A, B, C unabhängig voneinander für das bei der ersten Resonanzfrequenz von 110 kHz erfasste erste Sensorsignal sowie das bei der zweiten Resonanzfrequenz von 40 Hz erfasste zweite Sensorsignal getätigt werden.

Es sei nachdrücklich darauf hingewiesen, dass alternativ zu den zuvor beschriebenen Verfahren zur Durchführung des Vergleichs des zumindest einen ersten Kennwerts mit dem zumindest einen ersten Referenzwert sowie des zumindest einen zweiten Kennwerts mit dem zumindest einem zweiten Referenzwert auch andere Verfahren zur Ermittelung des Zustands der Wälzlager aus dem ersten Sensorsignal sowie dem zweiten Sensorsignal denkbar sind. Dies gilt insbesondere auch hinsichtlich der jeweils als Kennwert verwendeten Größe. Zu beachten ist jedoch, dass im Allgemeinen die Abhängigkeit des jeweiligen Kennwerts von der Drehzahl des Wälzlagers zu berücksichtigen ist.

Figur 5 zeigt ein drittes Ausführungsbeispiel der erfindungsgemäßen Anordnung. Dargestellt ist ein Motor M, dessen Wälzlager mittels eines Sensors SEN überwacht wird. Entsprechend den vorstehenden Ausführungen sei auch im Ausführungsbeispiel der Figur 5 angenommen, dass der Sensor SEN zwei Sensoreinheiten mit jeweils einem schwingfähigen System aufweist, die jeweils mit einer Bandbreite von ungefähr 5 kHz Signale um Resonanzfrequenzen von etwa 110 kHz. beziehungsweise etwa 40 kHz herum erfassen. Beide Resonanzfrequenzbereiche liefern jeweils ein Hüllkurvensignal, aus denen zur Ermittlung eines ersten sowie eines zweiten Kennwerts entsprechend den vorstehenden Ausführungen die jeweiligen Maximal- und Effektivwerte extrahiert werden.

In dem Ausführungsbeispiel der Figur 5 wird zur Verarbeitung und Auswertung der Sensorsignale eine Auswerte-Einrichtung *µ* verwendet, welche die etwa im Zusammenhang mit Figur 1 beschriebenen ersten und zweiten Mittel zur Signalverarbeitung mit umfasst. Dabei können die genannten Komponenten beispielsweise als gemeinsamer integrierter Schaltkreis ausgebildet sein. Über eine Schnittstelle OUT ist es der Auswerte-Einrichtung *µ* möglich, das Ergebnis der Auswertung zwecks Weiterverarbeitung, das heißt zum Beispiel Visualisierung, auszugeben. Im Rahmen der Überwachung des Wälzlagers des Elektromotors M greift die Auswerte-Einrichtung *µ* vorteilhafterweise ähnlich dem Ausführungsbeispiel der Figur 4 auf eine Speichereinrichtung DB zu, in der zumindest ein erster Referenzwert R1 sowie zumindest ein zweiter Referenzwert R2 gespeichert sind.

Figur 6 zeigt ein weiteres Diagramm zur Erläuterung des Ausführungsbeispiels des erfindungsgemäßen Verfahrens. Dabei sind der erste Referenzwert R1 sowie der zweite Referenzwert R2, die wiederum durch das Produkt K der für ein Referenzwälzlager ermittelten Werte von Amplitude und Effektivwert gegeben sind, jeweils als Funktion des Quadrats der Drehzahl f² aufgetragen. Es sei angenommen, dass es sich bei dem überwachten Wälzlager um ein Wälzlager des Typs 6208 handelt, dass bei einer Drehzahl von 30 Hz betrieben wird. Weiterhin sei angenommen, dass eine Anordnung entsprechend der Darstellung in Figur 5 verwendet wird, wobei in der Speichereinrichtung DB für die drehzahlabhängige Bestimmung der Referenzwerte R1 und R2 jeweils die Steigung der in Figur 6 dargestellten Geraden gespeichert ist. Es sei darauf hingewiesen, dass die Speichereinrichtung DB nicht notwendigerweise in räumlicher Nähe der Auswerte-Einrichtung *µ* angeordnet zu sein braucht. So kann es sich bei der Speichereinrichtung DB beispielsweise auch um einen zentralen Datenbank-Server handeln, der von der Auswerte-Einrichtung *µ* über eine drahtlose oder drahtgebundene Kommunikations-Schnittstelle abfragbar ist.

Zur Ermittlung und Überwachung des Wälzlagers ist es der Auswerte-Einrichtung *µ* nun möglich, aus der Speichereinrichtung DB den Wert der beiden Steigungen spezifisch für ein Wälzlager des Typs 6208 abzurufen. Aus den das Verhalten des Referenzlagers charakterisierenden Steigungen kann daraufhin für die Betriebsdrehzahl des Wälzlagers von 30 Hz der erste Referenzwert R1 sowie der zweite Referenzwert R2 ermittelt werden. Übersteigt im Betrieb des Wälzlagers zumindest einer der Kennwerte K1, K2 den jeweiligen Referenzwert R1, R2 für einen bestimmten, vom Anwender festlegbaren Zeitraum, der z.B. 30 Minuten betragen kann, so wird vorteilhafterweise ein Alarmsignal ausgegeben. In diesem Alarmsignal bzw. zusätzlich zu diesem Alarmsignal kann der Anwender bzw. Betreiber des Wälzlagers darüber informiert werden, ob der erste Kennwert K1 oder der zweite Kennwert K2 den jeweiligen zugehörigen Referenzwert R1, R2 überschreitet, d.h. ob der Zustand des Wälzlagers in Bezug auf eine gerade erfolgende Schädigung und/oder eine bereits erfolgte Schädigung des Lagers kritisch ist.

Figur 7 zeigt ein weiteres Diagramm zur Erläuterung des Ausführungsbeispiels des erfindungsgemäßen Verfahrens. Hierbei ist der zweite Kennwert K2, d.h. der aus dem bei einer Resonanzfrequenz von 40 kHz ermittelte Kennwert, als Funktion der Zeit t dargestellt. Darüber hinaus ist mittels der gestrichelten waagerechten Linie der zugehörige zweite Referenzwert R2 angedeutet.

Abhängig vom jeweiligen Einsatzzweck des überwachten Lagers soll eine kurzzeitige Überschreitung eines Referenzwerts in der Regel nicht unmittelbar zu einem Alarm führen, d.h. ein Alarmsignal soll erst bei einer dauerhaften Überschreitung ausgelöst werden. Hierzu besteht vorteilhafterweise die Möglichkeit, dass der Anwender eine Zeitdauer T_{A} sowie einen Überschreitungsgrad vorgibt. Diese entsprechen den im Zusammenhang mit der Figur 4 erwähnten Parametern B und C und werden derart verwendet, dass bei einem Überschreitungsgrad von beispielsweise 80% ein Alarmsignal lediglich dann ausgelöst wird, wenn innerhalb eines Zeitfensters der Länge T_{A} der betreffende Kennwert seinen zugehörigen Referenzwert zumindest während 80% der Zeit der Zeitdauer T_{A} überschreitet. In dem Ausführungsbeispiel der Figur 7 wird der zweite Referenzwert R2 von dem zweiten Kennwert K2 für die gesamte vorgegebene Zeitdauer T_{A} überschritten. Dies führt somit dazu, dass seitens der Auswerte-Einrichtung ein Alarmsignal erzeugt und ausgegeben wird.

In dem beschriebenen Ausführungsbeispiel sei angenommen, dass der in Figur 7 aus Gründen der Übersichtlichkeit nicht dargestellte erste Kennwert K1 seinen zugehörigen Referenzwert R1 nicht überschreitet. In diesem Fall wird das Messergebnis daher dahingehend interpretiert, dass die aktive Schädigungsrate, das heißt die gerade erfolgende Schädigung, des überwachten Wälzlagers nicht groß genug ist, um zu einer Überschreitung des ersten Referenzwerts zu führen. Dennoch überschreitet die insgesamt bereits erfolgte Schädigung, d.h. der vorliegende Gesamtschaden, ein akzeptables Maß, so dass eine Gefahr für das Wälzlager und damit verbunden für die Komponente, deren Bestandteil das Wälzlager ist, sowie gegebenenfalls für einen gesteuerten Prozess oder eine gesamte Anlage besteht. Daher wird aufgrund des Überschreitens des zweiten Referenzwerts R2 durch den zweiten Kennwert K2 ein Alarm ausgelöst.

Entsprechend den vorstehenden Ausführungen bietet das erfindungsgemäße Verfahren insbesondere den Vorteil, dass ein einziger Sensor mit zwei Sensoreinheiten für die Zustandsüberwachung von Wälzlagern beliebigen Typs verwendet werden kann, soweit diese aus demselben Material, das heißt beispielsweise Stahl bestehen. Im Falle einer Verwendung eines entsprechenden Sensors für ein Wälzlager aus einem anderen Material ist es vorteilhafterweise lediglich erforderlich, die erste Resonanzfrequenz des Sensors zu verändern. Sofern das Wälzlager beispielsweise aus Keramik bestehen würde, könnte somit ein baugleicher Sensor mit einer identischen zweiten Resonanzfrequenz eingesetzt werden. Die erste Resonanzfrequenz ist entsprechend den vorstehenden Ausführungen vom Material abhängig und würde somit in der Regel für Keramik von den zuvor für Stahl angegebenen 110 kHz abweichen.

Da das Verfahren sowie die Anordnung vorzugsweise zwei schmalbandige Resonanzfrequenzen verwenden, sind darüber hinaus aufwändige Analysen eines größeren Frequenzbereichs, beispielsweise hinsichtlich von der Größe des überwachten Wälzlagers abhängiger Überrollfrequenzen, nicht erforderlich. Des Weiteren ist es entsprechend den zuvor beschriebenen Ausführungsbeispielen für eine Bestimmung des Zustands des überwachten Wälzlagers vorteilhafterweise lediglich erforderlich, für jeden Wälzlagertyp zwei Parameter bzw. Referenzwerte an die Auswerte-Einrichtung zu übertragen.

## Patentansprüche

1. Verfahren zum Ermitteln und zum Überwachen des Zustands eines Wälzlagers (W), wobei im Betrieb des Wälzlagers (W)
- ein erstes Sensorsignal (S1) in Form eines Schallemissionssignals in einem ersten Frequenzband im Ultraschallbereich erfasst wird,
- ein zweites Sensorsignal (S2) in einem zweiten Frequenzband niedrigerer Frequenz im Ultraschallbereich erfasst wird,
- aus der Signalform des ersten Sensorsignals (S1) zumindest ein erster Kennwert (K1) für eine gerade erfolgende Schädigung des Wälzlagers (W) ermittelt wird,
- aus der Signalform des zweiten Sensorsignals (S2) zumindest ein zweiter Kennwert (K2) für eine bereits erfolgte Schädigung des Wälzlagers (W) ermittelt wird und
- unter Durchführung eines Vergleichs
- des zumindest einen ersten Kennwerts (K1) mit zumindest einem von der Drehzahl des Wälzlagers (W) abhängigen ersten Referenzwert (R1) sowie
- des zumindest einen zweiten Kennwerts (K2) mit zumindest einem von der Drehzahl des Wälzlagers (W) abhängigen zweiten Referenzwert (R2)
der Zustand des Wälzlagers (W) ermittelt wird **dadurch gekennzeichnet, dass**
bei einem Wälzlager (W) aus Stahl das erste Sensorsignal (S1) bei einer Resonanzfrequenz zwischen 100 kHz und 120 kHz erfasst wird und
das zweite Sensorsignal (S2) mit einer zweiten Resonanzfrequenz im Frequenzbereich zwischen 25 kHz und 50 kHz erfasst wird.

2. Verfahren nach Anspruch 1,
**dadurch gekennzeichnet, dass** der zumindest eine erste Kennwert (K1) mit zumindest einem auch von dem Material, der Größe, der Masse und/oder dem Typ des Wälzlagers (W) abhängigen ersten Referenzwert (R1) verglichen wird.

3. Verfahren nach Anspruch 1 oder 2,
**dadurch gekennzeichnet, dass** der zumindest eine zweite Kennwert (K2) mit zumindest einem auch von dem Material, der Größe, der Masse und/oder dem Typ des Wälzlagers (W) abhängigen zweiten Referenzwert (R2) verglichen wird.

4. Verfahren nach einem der vorangehenden Ansprüche,
**dadurch gekennzeichnet, dass** das erste Sensorsignal (S1) mittels eines ersten mechanisch schwingfähigen Systems mit einer vom Material des Wälzlagers (W) abhängigen und von Größe und Drehzahl des Wälzlagers (W) unabhängigen ersten Resonanzfrequenz erfasst wird.

5. Verfahren nach einem der vorangehenden Ansprüche,
**dadurch gekennzeichnet, dass** das erste Sensorsignal (S1) in einem ersten Frequenzband einer Bandbreite von 4 kHz bis 8 kHz erfasst wird.

6. Verfahren nach einem der vorangehenden Ansprüche,
**dadurch gekennzeichnet, dass** das zweite Sensorsignal (S2) unabhängig von Material, Größe und Drehzahl des Wälzlagers (W) mittels eines zweiten mechanisch schwingfähigen Systems mit einer zweiten Resonanzfrequenz erfasst wird.

7. Verfahren nach einem der vorangehenden Ansprüche,
**dadurch gekennzeichnet, dass** das zweite Sensorsignal (S2) in einem zweiten Frequenzband einer Bandbreite von 3 kHz bis 7 kHz erfasst wird.

8. Verfahren nach einem der vorangehenden Ansprüche,
**dadurch gekennzeichnet, dass** zur Ermittlung des ersten Kennwerts (K1) und des zweiten Kennwerts (K2) das Produkt aus Maximalwert und Effektivwert des jeweiligen Sensorsignals (K1, K2) ermittelt wird.

9. Verfahren nach einem der vorangehenden Ansprüche,
**dadurch gekennzeichnet, dass** ein Alarmsignal ausgegeben wird, sofern der zumindest eine erste Kennwert (K1) und/oder der zumindest eine zweite Kennwert (K2) über eine definierte Zeitdauer (TA) von dem jeweiligen Referenzwert (R1, R2) abweichen.

10. Anordnung zum Ermitteln und zum Überwachen des Zustands eines Wälzlagers (W) in seinem Betrieb mit
- einer ersten Sensoreinrichtung (SE1) zum Erfassen eines ersten Sensorsignals (S1) in Form eines Schallemissionssignals in einem ersten Frequenzband im Ultraschallbereich, wobei die erste Sensoreinrichtung (SE1) zum Ermitteln des Zustands eines Wälzlagers (W) aus Stahl zum Erfassen des ersten Sensorsignals (S1) bei einer ersten Resonanzfrequenz zwischen 100 kHz und 120 kHz ausgebildet ist,
- einer zweiten Sensoreinrichtung (SE2) zum Erfassen eines zweiten Sensorsignals (S2) in einem zweiten Frequenzband niedrigerer Frequenz im Frequenzbereich zwischen 25 kHz und 50 kHz,
- ersten Mitteln zur Signalverarbeitung (F1) zum Ermitteln zumindest eines ersten Kennwerts (K1) für eine gerade erfolgende Schädigung des Wälzlagers (W) aus der Signalform des ersten Sensorsignals (S1),
- zweiten Mitteln zur Signalverarbeitung (F2) zum Ermitteln zumindest eines zweiten Kennwerts (K2) für eine bereits erfolgte Schädigung des Wälzlagers (W) aus der Signalform des zweiten Sensorsignals (S2) und
- einer Auswerte-Einrichtung (µ) zum Ermitteln des Zustands des Wälzlagers (W) unter Durchführung eines Vergleichs
- des zumindest einen ersten Kennwerts (K1) mit zumindest einem von der Drehzahl des Wälzlagers (W) abhängigen ersten Referenzwert (R1) sowie
- des zumindest einen zweiten Kennwerts (K2) mit zumindest einem von der Drehzahl des Wälzlagers (W) abhängigen zweiten Referenzwert (R2).

11. Anordnung nach Anspruch 10,
**dadurch gekennzeichnet, dass** die Auswerte-Einrichtung (µ) zum Vergleichen des zumindest einen ersten Kennwerts (K1) mit zumindest einem auch von dem Material, der Größe, der Masse und/oder dem Typ des Wälzlagers (W) abhängigen ersten Referenzwert (R1) ausgebildet ist.

12. Anordnung nach Anspruch 10 oder 11,
**dadurch gekennzeichnet, dass** die Auswerte-Einrichtung (µ) zum Vergleichen des zumindest einen zweiten Kennwerts (K2) mit zumindest einem auch von dem Material, der Größe, der Masse und/oder dem Typ des Wälzlagers (W) abhängigen zweiten Referenzwert (R2) ausgebildet ist.

13. Anordnung nach einem der Ansprüche 10 bis 12,
**dadurch gekennzeichnet, dass** die erste Sensoreinrichtung (SE1) zum vom Material des Wälzlagers (W) abhängigen und von Größe und Drehzahl des Wälzlagers (W) unabhängigen Erfassen des ersten Sensorsignals (S1) ein erstes mechanisch schwingfähiges System mit einer ersten Resonanzfrequenz aufweist.

14. Anordnung nach einem der Ansprüche 10 bis 13,
**dadurch gekennzeichnet, dass** die erste Sensoreinrichtung (SE1) zum Erfassen des ersten Sensorsignals (S1) in einem ersten Frequenzband einer Bandbreite von 4 kHz bis 8 kHz vorgesehen ist.

15. Anordnung nach einem der Ansprüche 10 bis 14,
**dadurch gekennzeichnet, dass** die zweite Sensoreinrichtung (SE2) zum von Material, Größe und Drehzahl des Wälzlagers (W) unabhängigen Erfassen des zweiten Sensorsignals (S2) ein zweites mechanisch schwingfähiges System aufweist.

16. Anordnung nach einem der Ansprüche 10 bis 15,
**dadurch gekennzeichnet, dass** die zweite Sensoreinrichtung (SE2) zum Erfassen des zweiten Sensorsignals (S2) in einem zweiten Frequenzband einer Bandbreite von 3 kHz bis 7 kHz vorgesehen ist.

17. Anordnung nach einem der Ansprüche 10 bis 16,
**dadurch gekennzeichnet, dass** die ersten und die zweiten Mittel zur Signalverarbeitung (F1, F2) zur Ermittlung des ersten (K1) bzw. des zweiten Kennwerts (K2) zum Ermitteln des Produkts aus Maximalwert und Effektivwert des jeweiligen Sensorsignals ausgebildet sind.

18. Anordnung nach einem der Ansprüche 10 bis 17,
**dadurch gekennzeichnet, dass** die Auswerte-Einrichtung (µ) zum Ausgeben eines Alarmsignals vorgesehen ist, sofern der zumindest eine erste Kennwert (K1) und/oder der zumindest eine zweite Kennwert (K2) über eine definierte Zeitdauer von dem jeweiligen Referenzwert (R1, R2) abweichen.

19. Anordnung nach einem der Ansprüche 10 bis 18,
**dadurch gekennzeichnet, dass** die erste und die zweite Sensoreinrichtung (SE1, SE2) als gemeinsames mikromechanisches System ausgebildet sind.

20. Anordnung nach einem der Ansprüche 10 bis 19,
**dadurch gekennzeichnet, dass** die erste und/oder die zweite Sensoreinrichtung (SE1, SE2) als piezoelektrische, piezoresistive, kapazitive oder induktive Sensoreinheiten realisiert sind.

21. Anordnung nach einem der Ansprüche 10 bis 20,
**dadurch gekennzeichnet, dass** die ersten Mittel zur Signalverarbeitung (F1), die zweiten Mittel zur Signalverarbeitung (F2) und die Auswerte-Einrichtung (µ) in einem integrierten elektrischen Schaltkreis zusammengefasst sind.

22. Anordnung nach einem der Ansprüche 10 bis 21,
**dadurch gekennzeichnet, dass** die erste und die zweite Sensoreinrichtung (SE1, SE2) in einem integrierten elektrischen Schaltkreis zusammengefasst sind.

23. Anordnung nach einem der Ansprüche 10 bis 22,
**dadurch gekennzeichnet, dass**
- eine Verstärkereinheit (V) zum Verstärken des ersten und/oder des zweiten Sensorsignals (S1, S2) vorgesehen ist und
- die Auswerte-Einrichtung (µ) zum Einstellen der Verstärkung der Verstärkereinheit (V) vorgesehen ist.

## Claims

1. Method for determining and monitoring the state of a rolling bearing (W), wherein, during operation of the rolling bearing (W),
- a first sensor signal (S1) is captured in the form of an acoustic emission signal in a first frequency band in the ultrasonic range,
- a second sensor signal (S2) is captured in a second frequency band of lower frequency in the ultrasonic range,
- at least one first characteristic value (K1) for ongoing damage to the rolling bearing (W) is determined from the signal shape of the first sensor signal (S1),
- at least one second characteristic value (K2) for damage that has already occurred to the rolling bearing (W) is determined from the signal shape of the second sensor signal (S2), and
- the state of the rolling bearing (W) is determined by comparing
- the at least one first characteristic value (K1) with at least one first reference value (R1) dependent on the speed of the rolling bearing (W) and
- the at least one second characteristic value (K2) with at least one second reference value (R2) dependent on the speed of the rolling bearing (W),
**characterised in that**
in the case of a steel rolling bearing (W), the first sensor signal (S1) is captured at a resonant frequency of between 100 kHz and 120 kHz and
the second sensor signal (S2) is captured with a second resonant frequency in the frequency range between 25 kHz and 50 kHz.

2. Method according to claim 1,
**characterised in that** the at least one first characteristic value (K1) is compared with at least one first reference value (R1) also dependent on the material, size, mass and/or type of the rolling bearing (W).

3. Method according to claim 1 or 2,
**characterised in that** the at least one second characteristic value (K2) is compared with at least one second reference value (R2) also dependent on the material, size, mass and/or type of the rolling bearing (W).

4. Method according to one of the preceding claims,
**characterised in that** the first sensor signal (S1) is captured by means of a first mechanically oscillatory system with a first resonant frequency dependent on the material of the rolling bearing (W) and independent of the size and speed of the rolling bearing (W).

5. Method according to one of the preceding claims,
**characterised in that** the first sensor signal (S1) is captured in a first frequency band with a bandwidth of 4 kHz to 8 kHz.

6. Method according to one of the preceding claims,
**characterised in that** the second sensor signal (S2) is captured independently of the material, size and speed of the rolling bearing (W) by means of a second mechanically oscillatory system with a second resonant frequency.

7. Method according to one of the preceding claims,
**characterised in that** the second sensor signal (S2) is captured in a second frequency band with a bandwidth of 3 kHz to 7 kHz.

8. Method according to one of the preceding claims,
characteri sed in that the product of the maximum value and RMS value of the respective sensor signal (K1, K2) is determined in order to determine the first characteristic value (K1) and the second characteristic value (K2).

9. Method according to one of the preceding claims,
**characterised in that** an alarm signal is output if the at least one first characteristic value (K1) and/or the at least one second characteristic value (K2) deviate from the respective reference value (R1, R2) over a defined time period (T_{A}).

10. Arrangement for determining and monitoring the state of a rolling bearing (W) during operation, comprising
- a first sensor device (SE1) for capturing a first sensor signal (S1) in the form of an acoustic emission signal in a first frequency band in the ultrasonic range, wherein the first sensor device (SE1) is designed to capture the first sensor signal (S1) at a first resonant frequency between 100 kHz and 120 kHz for determining the state of a steel rolling bearing (W),
- a second sensor device (SE2) for capturing a second sensor signal (S2) in a second frequency band of lower frequency in the frequency range between 25 kHz and 50 kHz,
- first signal processing means (F1) for determining, from the signal shape of the first sensor signal (S1), at least one first characteristic value (K1) for ongoing damage to the rolling bearing (W),
- second signal processing means (F2) for determining, from the signal shape of the second sensor signal (S2), at least one second characteristic value (K2) for damage that has already occurred to the rolling bearing (W) and
- an evaluation device, (*µ*) for determining the state of the rolling bearing (W) by comparing
- the at least one first characteristic value (K1) with at least one first reference value (R1) dependent on the speed of the rolling bearing (W) and
- the at least one second characteristic value, (K2) with at least one second reference value (R2) dependent on the speed of the rolling bearing (W).

11. Arrangement according to claim 10,
**characterised in that** the evaluation device (*µ*) is designed to compare the at least one first characteristic value (K1) with at least one first reference value (R1) also dependent on the material, size, mass and/or type of the rolling bearing (W).

12. Arrangement according to claim 10 or 11, **characterised in that** the evaluation device (*µ*) is designed to compare the at least one second characteristic value (K2) with at least one second reference value (R2) also dependent on the material, size, mass and/or type of the rolling bearing (W).

13. Arrangement according to one of claims 10 to 12, **characterised in that** the first sensor device (SE1) has a first mechanically oscillatory system with a first resonant frequency for capturing the first sensor signal (S1) dependently on the material of the rolling bearing (W) and independently of the size and speed of the rolling bearing (W).

14. Arrangement according to one of claims 10 to 13, **characterised in that** the first sensor device (SE1) is designed to capture the first sensor signal (S1) in a first frequency band with a bandwidth of 4 kHz to 8 kHz.

15. Arrangement according to one of claims 10 to 14, **characterised in that** the second sensor device (SE2) has a second mechanically oscillatory system for capturing the second sensor signal (S2) independently of the material, size and speed of the rolling bearing (W).

16. Arrangement according to one of claims 10 to 15, **characterised in that** the second sensor device (SE2) is designed to capture the second sensor signal (S2) in a second frequency band with a bandwidth of 3 kHz to 7 kHz.

17. Arrangement according to one of claims 10 to 16, **characterised in that** the first and the second signal processing means (F1, F2) are designed to determine the product of the maximum and RMS value of the respective sensor signal for determining the first (K1) and second characteristic value (K2) respectively.

18. Arrangement according to one of claims 10 to 17, **characterised in that** the evaluation device (*µ*) is designed to output an alarm signal if the at least one first characteristic value (K1) and/or the at least one second characteristic value (K2) deviate from the respective reference value (R1, R2) over a defined period of time.

19. Arrangement according to one of claims 10 to 18, **characterised in that** the first and the second sensor device (SE1, SE2) are implemented as a common micromechanical system.

20. Arrangement according to one of claims 10 to 19, **characterised in that** the first and/or the second sensor device (SE1, SE2) are implemented as piezoelectric, piezoresistive, capacitive or inductive sensor units.

21. Arrangement according to one of claims 10 to 20, **characterised in that** the first signal processing means (F1), the second signal processing means (F2) and the evaluation device (*µ*) are combined in an integrated electrical circuit.

22. Arrangement according to one of claims 10 to 21, **characterised in that** the first and the second sensor device, (SE1, SE2) are combined in an integrated electrical circuit.

23. Arrangement according to one of claims 10 to 22, **characterised in that**
- an amplifier unit (V) is provided for amplifying the first and/or the second sensor signal (S1, S2) and
- the evaluation device (*µ*) is designed to adjust the gain of the amplifier unit (V).

## Revendications

1. Procédé destiné à déterminer et à surveiller l'état d'un roulement (W), dans lequel pendant le fonctionnement du roulement (W)
- un premier signal de détection (S1) sous la forme d'un signal d'émission sonore dans une première bande de fréquences est détecté dans le domaine des ultrasons,
- un deuxième signal de détection (S2) dans une deuxième bande de fréquences de fréquence inférieure dans le domaine des ultrasons est détecté,
- à partir de la forme de signal du premier signal de détection (S1) au moins une première valeur caractéristique (K1) est déterminée pour un endommagement du roulement (W) qui est en train de se produire,
- à partir de la forme de signal du deuxième signal de détection (S2) au moins une deuxième valeur caractéristique (K2) est déterminée pour un endommagement du roulement (W) qui vient de se produire et
- en réalisant une comparaison
- de l'au moins une première valeur caractéristique (K1) avec au moins une première valeur de référence (R1) dépendante du nombre de tours du roulement (W) ainsi que
- de l'au moins une deuxième valeur caractéristique (K2) avec au moins une deuxième valeur de référence (R2) dépendante du nombre de tours du roulement (W)
l'état du roulement (W) est déterminé
**caractérisé en ce que**
lorsque le roulement (W) est en acier le premier signal de détection (S1) est détecté à une fréquence de résonance entre 100 kHz et 120 kHz et
le deuxième signal de détection (S2) est détecté à une deuxième fréquence de résonance entre 25 kHz et 50 kHz.

2. Procédé selon la revendication 1,
**caractérisé en ce que**
l'au moins une première valeur caractéristique (K1) est comparée avec au moins une première valeur de référence (R1) également dépendante du matériau, de la taille, de la masse et/ou du type du roulement (W).

3. Procédé selon la revendication 1 ou 2,
**caractérisé en ce que**
l'au moins une deuxième valeur caractéristique (K2) est comparée avec au moins une deuxième valeur de référence (R2) également dépendante du matériau, de la taille, de la masse et/ou du type du roulement (W).

4. Procédé selon l'une des revendications précédentes,
**caractérisé en ce que**
le premier signal de détection (S1) est détecté au moyen d'un premier système capable d'osciller mécaniquement à une première fréquence de résonance dépendante du matériau du roulement (W) et indépendante de la taille et du nombre de tours du roulement (W).

5. Procédé selon l'une des revendications précédentes,
**caractérisé en ce que**
le premier signal de détection (S1) est détecté dans une première bande de fréquences d'une largeur de bande de 4 kHz à 8 kHz.

6. Procédé selon l'une des revendications précédentes,
**caractérisé en ce que**
le deuxième signal de détection (S2) est détecté indépendamment du matériau, de la taille et du nombre de tours du roulement (W) au moyen d'un deuxième système capable d'osciller mécaniquement à une deuxième fréquence de résonance.

7. Procédé selon l'une des revendications précédentes,
**caractérisé en ce que**
le deuxième signal de détection (S2) est détecté dans une deuxième bande de fréquences d'une largeur de bande de 3 kHz à 7 kHz.

8. Procédé selon l'une des revendications précédentes,
**caractérisé en ce que**
pour déterminer la première valeur caractéristique (K1) et la deuxième valeur caractéristique (K2) le produit est déterminé à partir de la valeur maximale et de la valeur réelle du signal de détection (K1, K2) respectif.

9. Procédé selon l'une des revendications précédentes,
**caractérisé en ce qu'**
un signal d'alarme est émis si l'au moins une première valeur caractéristique (K1) et/ou l'au moins une deuxième valeur caractéristique (K2) diffèrent d'une durée définie (T_{A}) par rapport à la valeur de référence (R1, R2) respective.

10. Agencement destiné à déterminer et à surveiller l'état d'un roulement (W) pendant son fonctionnement comportant
- un premier dispositif de détection (SE1) destiné à détecter un premier signal de détection (S1) sous la forme d'un signal d'émission sonore dans une première bande de fréquences dans le domaine des ultrasons, le premier dispositif de détection (SE1) étant configuré pour déterminer l'état d'un roulement (W) en acier afin de détecter le premier signal de détection (S1) en présence d'une première fréquence de résonance entre 100 kHz et 120 kHz,
- un deuxième dispositif de détection (SE2) destiné à détecter un deuxième signal de détection (S2) dans une deuxième bande de fréquences de fréquence inférieure dans le domaine de fréquences entre 25 kHz et 50 kHz,
- des premiers moyens destinés à un traitement du signal (F1) afin de déterminer au moins une première valeur caractéristique (K1) pour un endommagent du roulement (W) qui est en train de se produire à partir de la forme de signal du premier signal de détection (S1),
- des deuxièmes moyens destinés à un traitement du signal (F2) afin de déterminer au moins une deuxième valeur caractéristique (K1) pour un endommagent du roulement (W) qui vient de se produire à partir de la forme de signal du deuxième signal de détection (S2), et
- un dispositif d'évaluation (µ) destiné à déterminer l'état du roulement (W) en réalisant une comparaison
- de l'au moins une première valeur caractéristique (K1) avec au moins une première valeur de référence (R1) dépendante du nombre de tours du roulement (W) ainsi que
- de l'au moins une deuxième valeur caractéristique (K2) avec au moins une deuxième valeur de référence (R2) dépendante du nombre de tours du roulement (W).

11. Agencement selon la revendication 10,
**caractérisé en ce que**
le dispositif d'évaluation (µ) est conçu pour comparer l'au moins une première valeur caractéristique (K1) avec au moins une première valeur de référence (R1) également dépendante du matériau, de la taille, de la masse et/ou du type du roulement (W).

12. Agencement selon la revendication 10 ou 11,
**caractérisé en ce que**
le dispositif d'évaluation (µ) est conçu pour comparer l'au moins une deuxième valeur caractéristique (K2) avec au moins une deuxième valeur de référence (R2) également dépendante du matériau, de la taille, de la masse et/ou du type du roulement (W).

13. Agencement selon l'une des revendications 10 à 12,
**caractérisé en ce que**
le premier dispositif de détection (SE1) présente un premier système capable d'osciller mécaniquement à une première fréquence de résonance pour la détection du premier signal de détection (S1) dépendante du matériau du roulement (W) et indépendante de la taille et du nombre de tours du roulement (W).

14. Agencement selon l'une des revendications 10 à 13,
**caractérisé en ce que**
le premier dispositif de détection (SE1) est prévu pour la détection du premier signal de détection (S1) dans une première bande de fréquences d'une largeur de bande de 4 kHz à 8 kHz.

15. Agencement selon l'une des revendications 10 à 14,
**caractérisé en ce que**
le deuxième dispositif de détection (SE2) présente un deuxième système capable d'osciller mécaniquement pour la détection du deuxième signal de détection (S2) indépendante du matériau, de la taille et du nombre de tours du roulement (W).

16. Agencement selon l'une des revendications 10 à 15,
**caractérisé en ce que**
le deuxième dispositif de détection (SE2) est prévu pour la détection du deuxième signal de détection (S2) dans une deuxième bande de fréquences d'une largeur de bande de 3 kHz à 7 kHz.

17. Agencement selon l'une des revendications 10 à 16,
**caractérisé en ce que**
les premiers et deuxièmes moyens destinés au traitement du signal (F1, F2) sont configurés pour déterminer la première (K1) ou la deuxième valeur caractéristique (K2) afin de déterminer le produit à partir de la valeur maximale et de la valeur réelle du signal de détection respectif.

18. Agencement selon l'une des revendications 10 à 17,
**caractérisé en ce que**
le dispositif d'évaluation (µ) est prévu pour émettre un signal d'alarme si l'au moins une première valeur caractéristique (K1) et/ou l'au moins une deuxième valeur caractéristique (K2) diffèrent d'une durée définie par rapport à la valeur de référence (R1, R2) respective.

19. Agencement selon l'une des revendications 10 à 18,
**caractérisé en ce que**
le premier et le deuxième dispositif de détection (SE1, SE2) sont configurés en tant que système micromécanique commun.

20. Agencement selon l'une des revendications 10 à 19,
**caractérisé en ce que**
le premier et/ou le deuxième dispositif de détection (SE1, SE2) sont réalisés en tant qu'unités de détection piézoélectriques, piézorésistives, capacitives ou inductives.

21. Agencement selon l'une des revendications 10 à 20,
**caractérisé en ce que**
les premiers moyens destinés au traitement du signal (F1), les deuxièmes moyens destinés au traitement du signal (F2) et le dispositif d'évaluation (µ) sont rassemblés dans un circuit de commutation électrique intégré.

22. Agencement selon l'une des revendications 10 à 21,
**caractérisé en ce que**
le premier et le deuxième dispositif de détection (SE1, SE2) sont rassemblés dans un circuit de commutation électrique intégré.

23. Agencement selon l'une des revendications 10 à 22, **caractérisé en ce que**
- pour l'amplification du premier et/ou du deuxième signal de détection (S1, S2) une unité d'amplification (V) est prévue, et
- le dispositif d'évaluation (µ) est prévu pour le réglage de l'amplification de l'unité d'amplification (V).
